# EUROPEAN PATENT APPLICATION

(11) **EP 4 290 202 A1**
(43) Date of publication of application: **13.12.2023**
(21) Application number: 22880156.9
(22) Date of filing: 27.09.2022
(51) Int. Cl.: G01M 3/04

(54) **DETECTION DEVICE FOR BATTERY CELL**

(30) Priority: 13.10.2021 CN 202122468097 U
(71) Applicant: Contemporary Amperex Technology Co., Limited, Ningde, Fujian 352100 (CN)
(72) Inventor: WANG, Zhiming, Ningde, Fujian 352100 (CN); MIAO, Siyu, Ningde, Fujian 352100 (CN); SHI, Qiming, Ningde, Fujian 352100 (CN); HUANG, Caixia, Ningde, Fujian 352100 (CN)
(74) Representative: Behr, Wolfgang
(86) International application number: PCT/CN2022/121904
(87) International publication number: WO 2023/061216

(57) **Abstract**

A detection device (20) for battery cells (10) comprises a detection bench (21), a heating apparatus (22) and a detection apparatus (23). The detection bench (21) is provided with an accommodating cavity (21a), the accommodating cavity (21a) being used to accommodate a battery cell (10). The heating apparatus (22) is provided in the accommodating cavity (21a) and used to heat the battery cell (10). The detection apparatus (23) is in communication with the accommodating cavity (21a) and used to detect the composition of gas in the accommodating cavity (21a) to determine whether an electrolyte solution of the battery cell (10) leaks. In the detection device, the battery cell (10) is placed in the accommodating cavity (21a), and the heating apparatus (22) is used to heat the battery cell (10) in the accommodating cavity (21a) to accelerate the vaporization of the electrolyte solution in the battery cell (10) in which electrolyte solution leakage exists and the release into the accommodating cavity (21a), so as to achieve fast and efficient detection of whether the electrolyte solution in the battery cell (10) leaks or not without affecting the structure and performance of the battery cell (10) itself, thereby ensuring the safety of the battery cell (10).

## Description

### Cross-Reference to Related Application

The present application claims priority to Chinese patent application 202122468097.7, entitled "DETECTION DEVICE FOR BATTERY CELLS", filed on October 13, 2021, the entire contents of which are incorporated herein by reference.

### Technical Field

The present application relates to the technical field of detection, and in particular to a detection device for battery cells.

### Background Art

Battery cells are widely used in electrical apparatuses such as mobile phones, laptops, battery vehicles, electric vehicles, electric planes, electric ships, electric toy cars, electric toy ships, electric toy planes and electric tools, and so on. The battery cells may include nickel-cadmium battery cells, nickel-hydrogen battery cells, lithium-ion battery cells, secondary alkaline zinc-manganese battery cells, and the like.

In the development of battery technologies, in addition to improving the performance of the battery cells, safety is also an issue that cannot be ignored. If the safety of a battery cell cannot be guaranteed, the battery cell cannot be used. Therefore, how to ensure the safety of battery cells is an urgent technical problem to be solved in the battery technologies. However, there are safety problems with battery cells caused by electrolyte solution leakage during the use of the battery cells. Therefore, how to ensure that electrolyte solution leakage does not occur in the finished battery cell products is an urgent technical problem to be solved in battery safety technologies.

### Summary of the Invention

The present application provides a detection device for battery cells, which can detect whether the electrolyte solution in a battery cell leaks and ensure the safety of the battery cell.

The present application proposes a detection device for battery cells, including: a detection bench that is provided with an accommodating cavity, the accommodating cavity being used to accommodate a battery cell; a heating apparatus that is provided in the accommodating cavity and used to heat the battery cell; and a detection apparatus that is in communication with the accommodating cavity and used to detect the composition of gas in the accommodating cavity to determine whether an electrolyte solution of the battery cell leaks.

In the detection device for battery cells provided in embodiments of the present application, the battery cell is placed in the accommodating cavity, and the heating apparatus is used to heat the battery cell in the accommodating cavity to accelerate the vaporization of the electrolyte solution in the battery cell in which electrolyte solution leakage exists and the release into the accommodating cavity, so as to achieve fast and efficient detection of whether the electrolyte solution in the battery cell leaks or not without affecting the structure and performance of the battery cell itself, thereby ensuring the safety of the battery cell.

In some embodiments, the detection device further includes a temperature control unit, the temperature control unit being electrically connected to the heating apparatus and used to control the temperature inside the accommodating cavity to be maintained at a preset temperature. This facilitates instant adjustment of the heating temperature by the heating apparatus to ensure that the temperature inside the accommodating cavity is maintained at the preset temperature.

In some embodiments, the preset temperature is 60°C to 100°C. The release of the electrolyte solution in the battery cell is accelerated as much as possible while ensuring the chemical stability of the electrolyte solution within the battery cell.

In some embodiments, the detection bench includes a storage bench and a hood body, the hood body covering the storage bench and forming the accommodating cavity, and the hood body having a communication port and a gas flow outlet, with the communication port being used to communicate the accommodating cavity with an external environment; and the detection apparatus has an input port, the input port being in communication with the gas flow outlet. In the process of gas in the accommodating cavity flowing into the detection device through the gas flow outlet for detection, the air pressure in the accommodating cavity decreases, and the arrangement of the communication port allows the outside air to enter the accommodating cavity, where the outside air has no effect on the composition of the electrolyte solution in the accommodating cavity and can prevent the air pressure in the accommodating cavity from being too low, thereby avoiding the phenomenon of expansion and deformation of the battery cell, especially a pouch cell.

In some embodiments, the detection device further includes an air pressure control unit, the air pressure control unit being in communication with the communication port and used to control the air pressure in the accommodating cavity to be maintained at a preset air pressure. Maintaining the air pressure in the accommodating cavity at the preset air pressure can ensure that the gas in the accommodating cavity can enter the detection apparatus to facilitate the detection of the gas in the accommodating cavity.

In some embodiments, the air pressure control unit includes: an air feeding apparatus that is in communication with the communication port and used to input air into the accommodating cavity; and an air pressure detection apparatus that is electrically connected to the air feeding apparatus and used to detect information about the air pressure in the accommodating cavity and feed the information about the air pressure in the accommodating cavity back to the air feeding apparatus. This allows the accommodating cavity to maintain a certain air pressure to ensure that the gas in the accommodating cavity can enter the detection apparatus through the gas flow outlet.

In some embodiments, the storage bench includes a base and a clamp provided on the base, the hood body covers the base and forms the accommodating cavity, and the clamp is used to clamp the battery cell. This facilitates the placement of the battery cell in the accommodating cavity and also facilitates the removal of the battery cell from the accommodating cavity after the detection is completed, thus effectively increasing the production takt and improving the utilization of the detection device.

In some embodiments, the detection apparatus includes a detection unit and a processing unit electrically connected to each other, the detection unit being in communication with the accommodating cavity and used to detect the composition of gas in the accommodating cavity, and the processing unit being used for data processing of a detection result from the detection unit. This arrangement can enable the detection device to have the function of determining whether the electrolyte solution in the battery cell leaks or not, which makes it more convenient for the staff to operate.

In some embodiments, the detection unit includes a gas chromatograph. The gas chromatograph is capable of detecting most types of esters, and the gas chromatograph has the advantages of high sensitivity, high performance, high selectivity, fast analysis, and a small amount of test specimens required.

In some embodiments, the detection device further includes an air extraction apparatus, the air extraction apparatus being in communication with the accommodating cavity and the detection apparatus and used to feed gas in the accommodating cavity to the detection apparatus. In this way, it is possible to ensure that there is airflow out of the accommodating cavity to facilitate the flow of the composition of the electrolyte solution leaking out of the battery cell to the detection apparatus.

In the detection device for battery cells provided in embodiments of the present application, the battery cell is placed in the accommodating cavity, and the heating apparatus is used to heat the battery cell in the accommodating cavity to accelerate the vaporization of the electrolyte solution in the battery cell in which electrolyte solution leakage exists and the release into the accommodating cavity, so as to achieve fast and efficient detection of whether the electrolyte solution in the battery cell leaks or not without affecting the structure and performance of the battery cell itself, thereby ensuring the safety of the battery cell.

### Description of Drawings

In order to illustrate the technical solutions of the examples of the present application more clearly, the following briefly introduces the drawings required in the examples of the present application. Obviously, the drawings described below are only some examples of the present application. For those of ordinary skill in the art, other drawings can also be obtained according to the drawings without any creative effort.
FIG. 1 is a schematic structural diagram of a battery cell under detection by a detection device as disclosed in an embodiment of the present application;
FIG. 2 is a schematic structural diagram of a detection device disclosed in an embodiment of the present application;
FIG. 3 is a schematic structural diagram of a detection device disclosed in another embodiment of the present application;
FIG. 4 is a schematic structural diagram of a detection device disclosed in a further embodiment of the present application;
FIG. 5 is a schematic structural diagram of a detection device disclosed in yet another embodiment of the present application;
FIG. 6 is a schematic structural diagram of a detection device disclosed in yet another embodiment of the present application;
FIG. 7 is a schematic structural diagram of a detection device disclosed in yet another embodiment of the present application;
FIG. 8 is a schematic structural diagram of a detection device disclosed in yet another embodiment of the present application;
FIG. 9 is a schematic structural diagram of a detection device disclosed in yet another embodiment of the present application.
In the accompanying drawings, the accompanying drawings are not necessarily drawn to actual scale.

### Description of reference numerals:

10. Battery cell; 11. Packaging bag; 12. Electrode lead;
20. Detection device; 21. Detection bench; 21a. Accommodating cavity; 211. Storage bench; 2111. Base; 2112. Clamp; 212. Hood body; 212a. Communication port; 212b. Gas flow outlet; 22. Heating apparatus; 23. Detection apparatus; 23a. Input port; 231. Detection unit; 232. Processing unit; 24. Temperature control unit; 25. Air pressure control unit; 251. Air feeding apparatus; 252. Air pressure detection apparatus; 26. Air extraction apparatus; 261. Air extraction control valve.

### Detailed Description

Embodiments of the present application will be described in further detail hereinafter in conjunction with the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Vertical" does not mean being vertical in the strict sense, but within the allowable range of error. "Parallel" does not mean being parallel in the strict sense, but within the allowable range of error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

In the present application, the battery cell may comprise a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, rectangular, or in other shapes, which is also not limited in the embodiments of the present application. The battery cells are generally divided into three types according to encapsulating manners: cylindrical battery cells, prismatic rectangular battery cells, and pouch cells, which are not limited in the embodiments of the present application.

Battery cells have the advantages of high energy density, high power density, high number of cyclic uses, and long storage time, and have been commonly used in electrical apparatuses suitable for battery cells. For example, the electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid vehicle, an extended-range electric vehicle, or the like. The spacecraft comprises airplanes, rockets, space shuttles, spaceships, and the like. The electric toy comprises fixed or mobile electric toys, such as game consoles, electric car toys, electric ship toys and electric aircraft toys. The electric tool comprises metal cutting electric tools, grinding electric tools, assembly electric tools and railway electric tools, such as electric drills, electric grinders, electric wrenches, electric screwdrivers, electric hammers, impact drills, concrete vibrators and electric planers. After discovering the problem of electrolyte solution leakage during the use of battery cells, the inventors analyzed and studied the structure and use environment of the battery cells as well as the assembly process of the battery cells. The inventors found that in the production process of battery cells before leaving the factory, the detection of leakage of battery cells is often carried out by means of manual visual inspection, which is not only inefficient, but also can only detect the leakage of battery cells that can be clearly seen, while the leakage of battery cells that cannot be identified by human eyes cannot be identified manually, thus leading to the inflow of battery cells with hidden danger of leakage into the market and causing certain safety hazards.

Based on the above problem discovered by the inventors, the inventors have improved the detection approach for battery cells, and the technical solutions described in the embodiments of the present application are applicable to the detection device for battery cells.

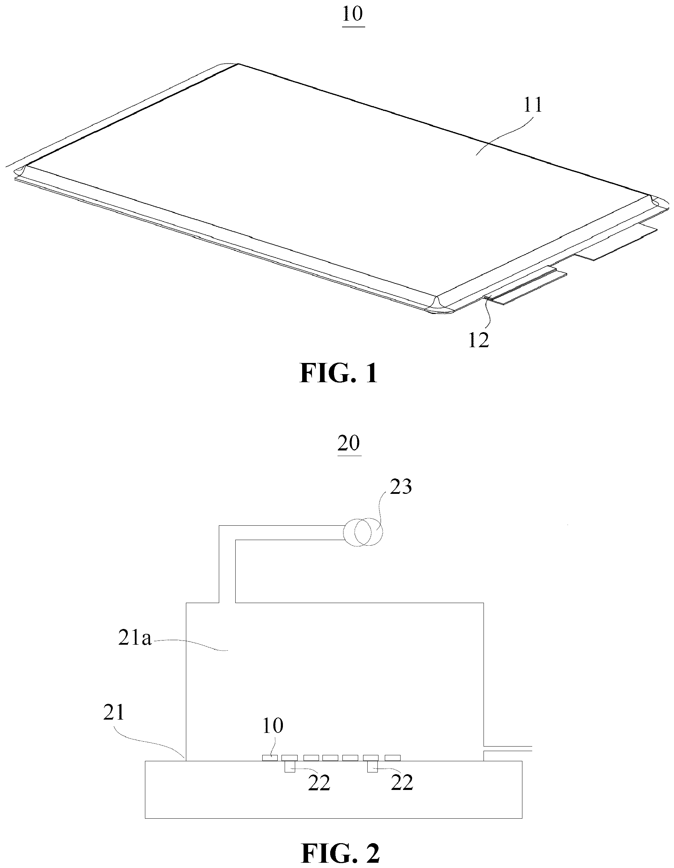

As shown in FIG. 1, the battery cell 10 includes: a packaging bag 11; an electrode assembly that is accommodated in the packaging bag 11; and an electrode lead 12 that is connected to the electrode assembly and extend outside the packaging bag 11.

An accommodating cavity is formed inside the packaging bag 11 to accommodate the electrode assembly and electrolyte. The shape of the packaging bag 11 may be determined based on the specific shape of the electrode assembly.

The packaging bag 11 includes a first packaging film and a second packaging film, wherein the first packaging film and the second packaging film are arranged up and down, and the electrode assembly is provided between the first packaging film and the second packaging film. The first packaging film and the second packaging film may be arranged separately or may be arranged as one piece. For example, the first packaging film and the second packaging film are made of a single packaging film (e.g., aluminum plastic film, steel plastic film, etc.) folded in half.

The first packaging film and the second packaging film are each of a multilayer structure. For example, the first packaging film and the second packaging film each include a protective layer, a metal layer and a heat sealing layer, with the protective layer and the heat sealing layer being provided on the two sides of the metal layer, respectively. Specifically, the heat sealing layer may be provided on the surface of the metal layer that faces the electrode assembly by an adhesive agent, and the protective layer may be provided on the surface of the metal layer that faces away from the electrode assembly by an adhesive agent.

Optionally, the material of the protective layer may be nylon or polyethylene terephthalate, the material of the metal layer may be aluminum foil or steel foil, and the material of the heat sealing layer may be polypropylene.

The first packaging film and the second packaging film are joined on the outer side of the electrode assembly and form a sealing region. For example, by means of thermocompression, the heat sealing layer of the first packaging film is fused to the heat sealing layer of the second packaging film and forms the sealing zone.

Different detection devices 20 provided by embodiments of the present application are illustrated as in FIGS. 2 to 9, respectively.

According to the detection device 20 for battery cells provided in an embodiment of the present application, as shown in FIG. 2, the detection device 20 for battery cells includes a detection bench 21, a heating apparatus 22, and a detection apparatus 23. The detection bench 21 is provided with an accommodating cavity 21a, the accommodating cavity 21a being used to accommodate a battery cell 10. The heating apparatus 22 is provided in the accommodating cavity 21a and used to heat the battery cell 10. The detection apparatus 23 is in communication with the accommodating cavity 21a and used to detect the composition of gas in the accommodating cavity 21a to determine whether an electrolyte solution of the battery cell 10 leaks.

Specifically, in the absence of leakage in the battery cell 10, the gas in the accommodating cavity 21a may contain only a very small amount of electrolyte solution composition. Once electrolyte solution leakage occurs in the battery cell 10, the composition of the electrolyte solution in the accommodating cavity 21a increases exponentially in order of magnitude. Therefore, regardless of whether electrolyte solution leakage occurs in the battery cell 10, the electrolyte solution composition in the gas inside the accommodating cavity 21a is likely to be detected by the detection apparatus 23, but with a large difference of order of magnitude between the two cases.

It can be understood that the process of determining whether the electrolyte solution of the battery cell 10 leaks can be conducted by the detection apparatus 23 itself, or the detection apparatus 23 can be set to be used only for detecting the composition of the gas inside the accommodating cavity 21a and it is determined whether there exists electrolyte solution leakage manually or by other instrument.

Exemplarily, the detection apparatus 23 itself is integrated with hardware for determining whether the electrolyte solution leaks. For instance, when the detection apparatus 23 detects that the content of electrolyte solution in the gas in the accommodating cavity exceeds a preset content level, it issues an alarm, that is, the detection apparatus 23 itself has the ability to determine whether the electrolyte solution of the battery cell 10 leaks.

If it is discovered through the detection by the detection device 20 that there is no problem of electrolyte solution leakage with the battery cell 10, the battery cell 10 can then be passed on to the next step in the process or the next step in the operation. On the other hand, once leakage is detected in the battery cell 10, the battery cell 10 will not be allowed to proceed to the next step in the process and will be scrapped or reprocessed.

The heating apparatus 22 may be provided inside the accommodating cavity 21a or outside the accommodating cavity 21a, as long as it can heat the battery cell 10 inside the accommodating cavity 21a. The heating apparatus 22 is configured to heat the battery cell 10, and in the case where there exists electrolyte solution leakage from the battery cell 10, it can speed up the vaporization of the composition of the electrolyte solution in the battery cell 10 and the release into the accommodating cavity 21a, which facilitates quick detection of the composition of the electrolyte solution in the gas in the accommodating cavity 21a by the detection apparatus 23.

No limitation is imposed on the structure and form of the detection bench 21, as long as it has the accommodating cavity 21a capable of accommodating the battery cell 10. The accommodating cavity 21a may be closed or be in communication with the outside world. The accommodating cavity 21a can accommodate only one battery cell 10 or can accommodate a plurality of battery cells 10 at the same time. In an embodiment where the accommodating cavity 21a can accommodate a plurality of battery cells 10, the battery cells 10 can be passed into the next step in the process or the next step in the operation if the detection device 20 does not detect the leakage problem with the battery cells 10. Once electrolyte solution leakage is detected in the battery cells 10, the plurality of battery cells 10 need to be detected separately, either by means of manual inspection or by continuing to use the detection device 20 provided in the present application, until a battery cell 10 in which electrolyte solution leakage exists is found.

In the detection device 20 for battery cells provided in embodiments of the present application, the battery cell 10 is placed in the accommodating cavity 21a, and the heating apparatus 22 is used to heat the battery cell 10 in the accommodating cavity 21a to accelerate the vaporization of the electrolyte solution in the battery cell 10 in which electrolyte solution leakage exists and the release into the accommodating cavity 21a, so as to achieve fast and efficient detection of whether the electrolyte solution in the battery cell 10 leaks or not without affecting the structure and performance of the battery cell 10 itself, thereby ensuring the safety of the battery cell 10.

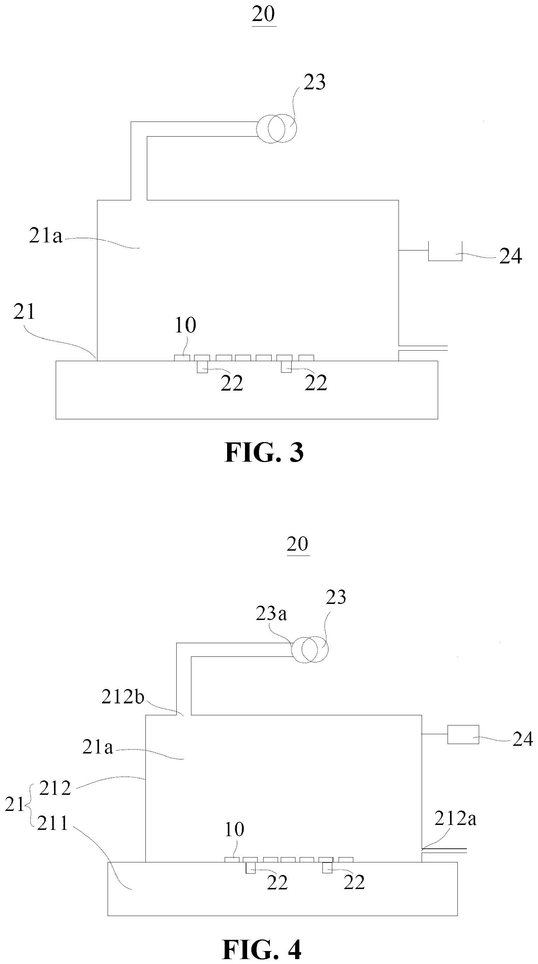

In some embodiments, as shown in FIG. 3, the detection device 20 further includes a temperature control unit 24, the temperature control unit 24 being electrically connected to the heating apparatus 22 and used to control the temperature inside the accommodating cavity 21a to be maintained at a preset temperature.

It can be understood that in order to ensure that the electrolyte solution in the battery cell 10 with the electrolyte solution leakage problem can be released quickly, the battery cell 10 needs to be heated to a higher temperature by the heating apparatus 22. However, too high a temperature will cause the nature of the electrolyte solution in the battery cell 10 to change, thus affecting the subsequent normal use of the battery cell 10. Therefore, the temperature control unit 24 needs to be configured to ensure that the battery cell 10 is maintained at a suitable temperature.

Specifically, the temperature control unit 24 monitors the environment temperature inside the accommodating cavity 21a in real time, and when detecting the environment temperature inside the accommodating cavity 21a to be too high or too low, it sends a control signal to the heating apparatus 22 to facilitate instant adjustment of the heating temperature by the heating apparatus 22, so as to ensure that the temperature inside the accommodating cavity 21a is maintained at the preset temperature.

The specific value range of the preset temperature needs to be specifically set according to the specific type of the battery cell 10 and the specific composition of the electrolyte solution inside the battery cell 10, so as to speed up the release of the electrolyte solution from the battery cell 10 as much as possible while ensuring the stable performance of the battery cell 10.

In some embodiments, the preset temperature is 60°C to 100°C.

Specifically, in some examples, the preset temperature may be any of a continuous range from 60°C to 100°C, such as 60°C to 80°C, 70°C to 90°C, 60°C to 70°C, or 70°C to 100°C, and so on. That is, the preset temperature may have an upper limit value and a lower limit value, and when the temperature in the accommodating cavity 21a exceeds the upper limit value or is lower than the lower limit value, the temperature control unit 24 sends a control signal to the heating apparatus 22 to facilitate real-time adjustment of the heating temperature for the battery cell 10 by the heating apparatus 22.

In some other examples, the preset temperature is any value from 60°C to 100°C, for example, the preset temperature is 60°C, 70°C, 80°C, 90°C or 100°C. In this case, the temperature control unit 24 can be configured to assign a temperature difference value to the preset temperature, and whenever the temperature in the accommodating cavity 21a exceeds or falls below the allowable error of the preset temperature, the temperature control unit 24 sends a control signal to the heating apparatus 22 to facilitate real-time adjustment of the heating temperature for the battery cell 10 by the heating apparatus 22.

The preset temperature is set to 60°C to 100°C to enable the battery cell 10 to release the electrolyte solution as fast as possible while ensuring the chemical stability of the electrolyte solution in the battery cell 10.

In some embodiments, as shown in FIG. 4, the detection bench 21 includes a storage bench 211 and a hood body 212, the hood body 212 covering the storage bench 211 and forming the accommodating cavity 21a, and the hood body 212 having a communication port 212a and a gas flow outlet 212b, with the communication port 212a being used to communicate the accommodating cavity 21a with the external environment. The detection apparatus 23 has an input port 23a, the input port 23a being in communication with the gas flow outlet 212b.

Specifically, the battery cell 10 to be detected is placed on the storage bench 211 and is located in the accommodating cavity 21a. The detection device 20 is located outside of the accommodating cavity 21a and is in communication with the accommodating cavity 21a via the gas flow outlet 212b. In the process of gas in the accommodating cavity 21a flowing into the detection device 20 through the gas flow outlet 212b for detection, the air pressure in the accommodating cavity 21a decreases, and the arrangement of the communication port 212a allows the outside air to enter the accommodating cavity 21a, where the outside air has no effect on the composition of the electrolyte solution in the accommodating cavity 21a and can prevent the air pressure in the accommodating cavity 21a from being too low, thereby avoiding the phenomenon of expansion and deformation of the battery cell 10, especially a pouch cell 10.

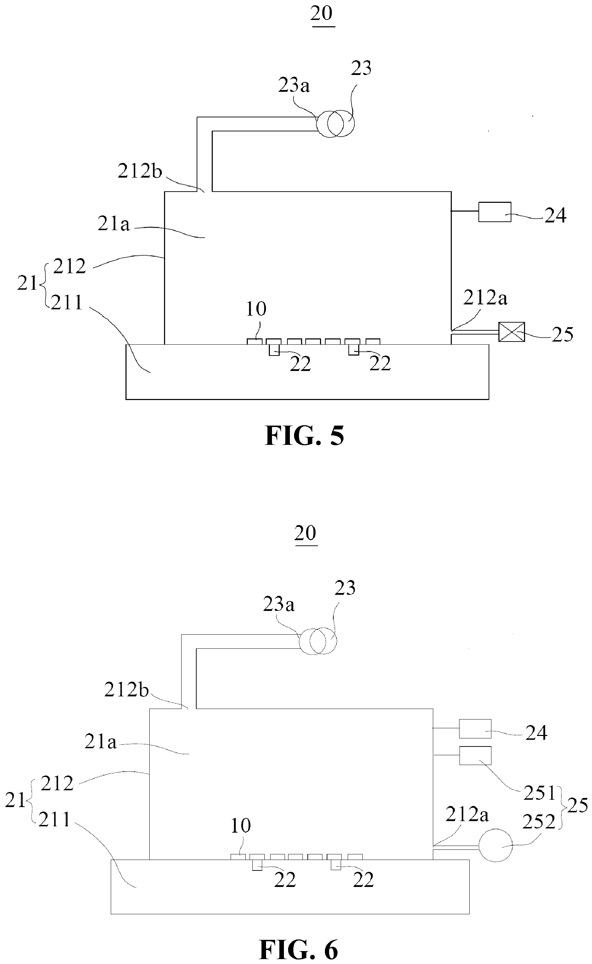

In some embodiments, as shown in FIG. 5, the detection device 20 further includes an air pressure control unit 25, the air pressure control unit 25 being in communication with the communication port 212a and used to control the air pressure in the accommodating cavity 21a to be maintained at a preset air pressure.

Specifically, the air pressure control unit 25 can detect the air pressure in the accommodating cavity 21a, and when the air pressure in the accommodating cavity 21a is lower than the preset air pressure, air is input to the detection device 20 via the communication port 212a. It can be understood that maintaining the air pressure in the accommodating cavity 21a at the preset air pressure can ensure that the gas in the accommodating cavity 21a can enter the detection apparatus 23 to facilitate the detection of the gas in the accommodating cavity 21a.

In some embodiments, as shown in FIG. 6, the air pressure control unit 25 includes an air feeding apparatus 251 and an air pressure detection apparatus 252. The air feeding apparatus 251 is in communication with the communication port 212a and used to input air to the accommodating cavity 21a. The air pressure detection apparatus 25223 is electrically connected to the air feeding apparatus 251 and used to detect information about the air pressure in the accommodating cavity 21a and feed the information about the air pressure in the accommodating cavity 21a back to the air feeding apparatus 251.

Specifically, the air pressure detection apparatus 252 can monitor information about the air pressure in the accommodating cavity 21a in real time and feed it back to the air feeding apparatus 251, and when the air pressure in the accommodating cavity 21a is lower than the preset air pressure, the air feeding apparatus 251 will input more air into the accommodating cavity 21a to maintain a certain air pressure in the accommodating cavity 21a, thereby ensuring that the gas in the accommodating cavity 21a can enter the detection apparatus 23 via the gas flow outlet 212b. Exemplarily, the air feeding apparatus 251 inputs dry and filtered clean air into the accommodating cavity 21a to reduce the possibility of corrosion of the battery cell 10 by the gas input into the accommodating cavity 21a.

The battery cell 10 may be placed directly in the accommodating cavity 21a, or it may be placed in the accommodating cavity 21a after being clamped by a specific clamp 2112.

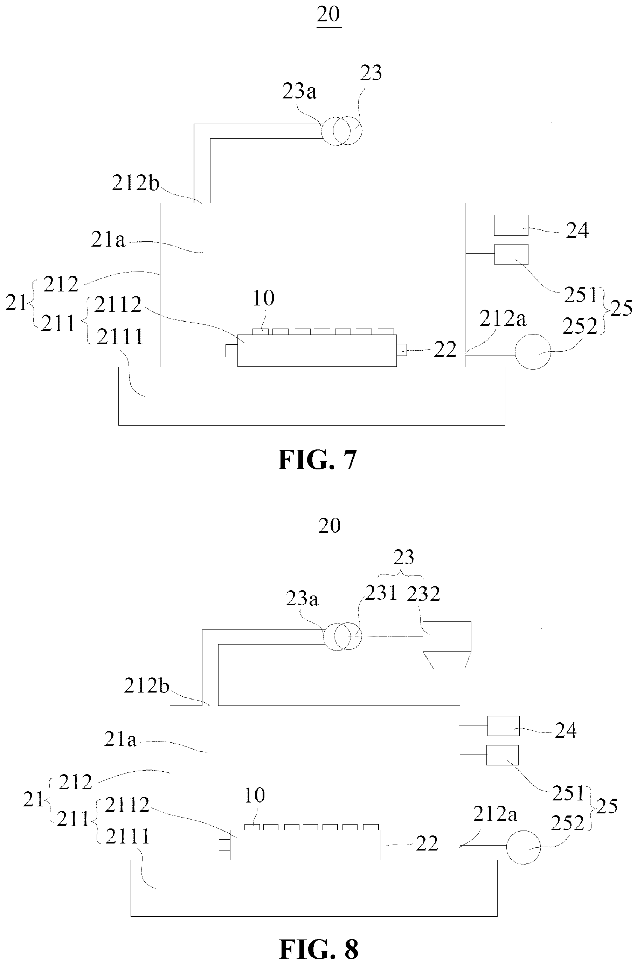

In some embodiments, as shown in FIG. 7, the storage bench 211 includes a base 2111 and a clamp 2112 provided on the base 2111, the hood body 212 covers the base 2111 and forms the accommodating cavity 21a, and the clamp 2112 is used to clamp the battery cell 10.

It can be understood that the arrangement of the battery cell 10 being clamped in the clamp 2112 facilitates the placement of the battery cell 10 in the accommodating cavity 21a and also facilitates the removal of the battery cell 10 from the accommodating cavity 21a after the detection is completed, thus effectively increasing the production takt and improving the utilization of the detection device 20.

In some embodiments, as shown in FIG. 8, the detection apparatus 23 includes a detection unit 231 and a processing unit 232 that are electrically connected to each other. The detection unit 231 is in communication with the accommodating cavity 21a and used to detect the composition of gas in the accommodating cavity 21a, and the processing unit 232 is used for data processing of a detection result from the detection unit 231.

Specifically, the detection unit 231 sends the detected compositions of the gas in the accommodating cavity 21a and the content of each composition to the processing unit 232, and the processing unit 232 determines whether the accommodating cavity 21a contains the composition of the electrolyte solution based on the composition of the gas in the accommodating cavity 21a and the content of each composition, and determines whether the electrolyte solution in the battery cell 10 leaks based on the content of the composition of the electrolyte solution.

The configuration of the detection apparatus 23 including the detection unit 231 and the processing unit 232 can enable the detection apparatus 23 to have the function of determining whether the electrolyte solution in the battery cell 10 leaks or not, which makes it more convenient for the staff to operate.

It can be understood that there are various compositions in the electrolyte solution in the battery cell 10, and the detection unit 231 may be able to detect only one specific composition in the electrolyte solution, or may be able to detect a plurality of compositions in the electrolyte solution.

In some embodiments, the detection unit 231 includes a gas chromatograph.

It can be understood that the compositions of the electrolyte solution in most battery cells 10 are mostly esters such as ethylene carbonate, and the gas chromatograph is capable of detecting most types of esters and can be used to detect most battery cells 10, thus improving the versatility of the detection device 20 for battery cells. In addition, the gas chromatograph has the advantages of high sensitivity, high performance, high selectivity, fast analysis, and a small amount of test specimens required.

It can be understood that the gas in the accommodating cavity 21a is caused to flow out into the detection apparatus 23 by means of increasing the air pressure in the accommodating cavity 21a. It is also possible to cause the gas in the accommodating cavity 21a to flow out into the detection apparatus 23 by means of applying a negative pressure to the detection apparatus 23.

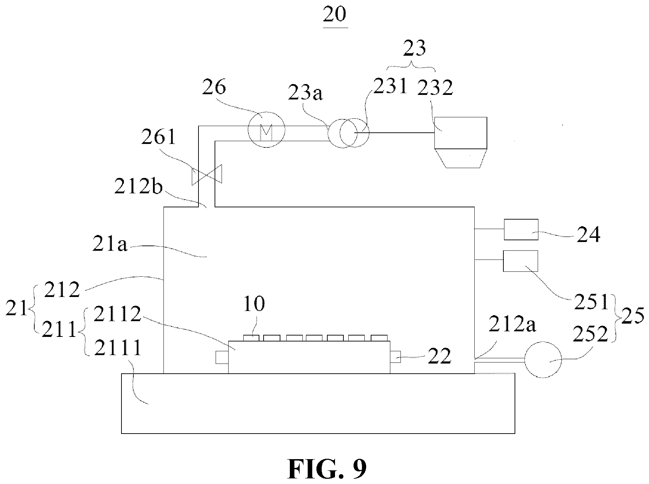

In some embodiments, as shown in FIG. 9, the detection device 20 further includes an air extraction apparatus 26, the air extraction apparatus 26 being in communication with the accommodating cavity 21a and the detection apparatus 23 and used to feed gas in the accommodating cavity 21a to the detection apparatus 23.

Specifically, the air extraction apparatus 26 is in communication with the gas flow outlet 212b to maintain a micro-vacuum state in the accommodating cavity 21a by generating a negative pressure, so as to ensure that there is airflow out of the accommodating cavity 21a to facilitate the flow of the composition of the electrolyte solution leaking out of the battery cell 10 to the detection apparatus 23.

In some embodiments, the air extraction apparatus 26 includes a pumping control valve 261 to control the turning on and off of the air extraction apparatus 26 and the magnitude of the flow rate of the airflow extracted by the air extraction apparatus 26, thus facilitating more accurate detection of the gas in the accommodating cavity 21a.

Although the present application has been described with reference to the preferred embodiments, various improvements can be made thereto and components thereof can be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

Although the present application has been described with reference to the preferred embodiments, various improvements can be made thereto and components thereof can be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A detection device (20) for battery cells, comprising:
a detection bench (21) that is provided with an accommodating cavity (21a), the accommodating cavity (21a) being used to accommodate a battery cell (10);
a heating apparatus (22) that is provided in the accommodating cavity (21a) and used to heat the battery cell (10); and
a detection apparatus (23) that is in communication with the accommodating cavity (21a) and used to detect the composition of gas in the accommodating cavity (21a) to determine whether an electrolyte solution of the battery cell (10) leaks.

2. The detection device (20) according to claim 1, wherein the detection device (20) further comprises a temperature control unit (24), the temperature control unit (24) being electrically connected to the heating apparatus (22) and used to control the temperature inside the accommodating cavity (21a) to be maintained at a preset temperature.

3. The detection device (20) according to claim 2, wherein the preset temperature is 60°C to 100°C.

4. The detection device (20) according to any one of claims 1 to 3, wherein the detection bench (21) comprises a storage bench (211) and a hood body (212), the hood body (212) covering the storage bench (211) and forming the accommodating cavity (21a), and the hood body (212) having a communication port (212a) and a gas flow outlet (212b), with the communication port (212a) being used to communicate the accommodating cavity (21a) with an external environment; and
the detection apparatus (23) has an input port (23a), the input port (23a) being in communication with the gas flow outlet (212b).

5. The detection device (20) according to claim 4, wherein the detection device (20) further comprises an air pressure control unit (25), the air pressure control unit (25) being in communication with the communication port (212a) and used to control the air pressure in the accommodating cavity (21a) to be maintained at a preset air pressure.

6. The detection device (20) according to claim 5, wherein the air pressure control unit (25) comprises:
an air feeding apparatus (251) that is in communication with the communication port (212a) and used to input air to the accommodating cavity (21a); and
an air pressure detection apparatus (252) that is electrically connected to the air feeding apparatus (251) and used to detect information about the air pressure in the accommodating cavity (21a) and feed the information about the air pressure in the accommodating cavity (21a) back to the air feeding apparatus (251).

7. The detection device (20) according to any one of claims 4 to 6, wherein the storage bench (211) comprises a base (2111) and a clamp (2112) provided on the base (2111), the hood body (212) covers the base (2111) and forms the accommodating cavity (21a), and the clamp (2112) is used to clamp the battery cell (10).

8. The detection device (20) according to any one of claims 1 to 7, wherein the detection apparatus (23) comprises a detection unit (231) and a processing unit (232) that are electrically connected to each other, the detection unit (231) being in communication with the accommodating cavity (21a) and used to detect the composition of gas in the accommodating cavity (21a), and the processing unit (232) being used for data processing of a detection result from the detection unit (231).

9. The detection device (20) according to claim 8, wherein the detection unit (231) comprises a gas chromatograph.

10. The detection device (20) according to any one of claims 1 to 9, wherein the detection device (20) further comprises an air extraction apparatus (26), the air extraction apparatus (26) being in communication with the accommodating cavity (21a) and the detection apparatus (23) and used to feed gas in the accommodating cavity (21a) to the detection apparatus (23).
